(19) Europäisches Patentamt

European Patent Office

Office européen des brevets

(11) **EP 0 646 485 B1**

## (12) EUROPEAN PATENT SPECIFICATION

(45) Date of publication and mention
of the grant of the patent:
**20.05.1998 Bulletin 1998/21**

(51) Int. Cl.$^6$: **B60K 11/04**, B60R 13/08

(21) Application number: **94114200.2**

(22) Date of filing: **09.09.1994**

(54) **Independently ducted cooling system**

Kühlkreis mit unabhängigem Leitungsystem

Système de refroidissement à conduits indépendantes

(84) Designated Contracting States:
**BE DE FR IT SE**

(30) Priority: **30.09.1993 US 129618**

(43) Date of publication of application:
**05.04.1995 Bulletin 1995/14**

(73) Proprietor: **CATERPILLAR INC.**
**Peoria Illinois 61629-6490 (US)**

(72) Inventors:
• **Carroll, Jim K.**
**Peoria, Illinois 61614 (US)**

• **Dicke, Paul A.**
**Peoria, Illinois 61614 (US)**

(74) Representative:
**Wagner, Karl H., Dipl.-Ing.**
**WAGNER & GEYER**
**Patentanwälte**
**Gewürzmühlstrasse 5**
**80538 München (DE)**

(56) References cited:
DE-A- 2 722 089          FR-A-  938 911
FR-A- 2 601 907          GB-A- 1 584 765
US-A- 3 866 580          US-A- 3 923 114
US-A- 3 978 938          US-A- 4 086 976

**Description**

Technical Field

This invention relates generally to noise reduction techniques for construction machinery and, more particularly, to a compact cooling system and internal combustion engine arrangement in which the cooling system is enclosed and ducted independent of the internal combustion engine.

Background Art

Legislation mandating the reduction of vehicle noise has forced manufacturers of construction machinery to reduce or shield the level of noise produced by both the cooling system and engine of the construction machinery. Engine noise can be attenuated by providing engine enclosures having indirect, acoustically-lined ducts for controlling airflow to the engine. However, prior engine enclosures ducted to reduce engine noise have tended to restrict airflow to the engine cooling system, therefore requiring higher fan speeds, and associated higher fan noise levels, to provide sufficient airflow to the cooling system.

For example, U.S. Patent No. 3,923,114 to Suzuki discloses a common engine and cooling system compartment formed generally as a closed construction that both restricts airflow entering the engine compartment through lined and/or louvered inlets and restricts airflow exhausting the engine compartment through acoustically-lined fenders which discharge at the rear of the vehicle. U.S. Patent No. 4,086,976 to Holm et al. discloses generally separate engine and cooling air compartments which draw in ambient air independent of one another. However, in U.S. Patent No. 4,086,976, an engine driven fan extends from the engine compartment into the cooling air compartment and through the heat exchanger, complicating both manufacturing and assembly of the various components.

What is needed is an independently ducted, reduced noise cooling system that includes a noise barrier similar to that shown in U.S. Patent No. 3,866,580. In U.S. Patent No. 3,866,580, an upright barrier wall divides an air-cooled enclosure into a substantially enclosed engine compartment and a separate engine heat exchanger and fan compartment. In providing such a noise barrier, the cooling system should be compact in view of vehicle space restrictions, while still providing reduced levels of noise. Ideally, such a cooling system should be particularly dimensioned, for example relative to the noise barrier, to provide a cooling system having reduced levels of noise for a variety of various sized construction machinery.

Disclosure of the Invention

According to one embodiment of the present invention, a compact cooling system and internal combustion engine arrangement for use with construction machinery to reduce noise is disclosed, comprising an engine compartment adapted for substantially enclosing an internal combustion engine therein, an internal combustion engine disposed in the engine compartment, a cooling system compartment adapted for substantially enclosing a cooling system therein separate from the engine compartment, the cooling system compartment being separated from the engine compartment by a noise barrier having a predetermined width, a cooling system disposed in the cooling system compartment, the cooling system including a heat exchanger and a fan for directing cooling air flow across the heat exchanger, the noise barrier being spaced a predetermined distance from the cooling system in the range of about 10 to 12 percent of the predetermined width to about 40 percent of the predetermined width.

According to another embodiment of the present invention, a compact cooling system and internal combustion engine arrangement for use with construction machinery to reduce noise is disclosed, comprising an engine compartment adapted for substantially enclosing an internal combustion engine therein, an internal combustion engine disposed in the engine compartment, a cooling system compartment adapted for substantially enclosing a cooling system therein separate from the engine compartment, the cooling system compartment being separated from the engine compartment by a noise barrier having a predetermined width, a cooling system disposed in the cooling system compartment, the cooling system including a fan defining a central axis for the cooling system, a heat exchanger asymmetrical in shape about the central axis, a fan shroud disposed about the fan, the fan shroud defining a flow path for directing cooling flow across the heat exchanger, the fan shroud including a radially converging inlet portion axisymmetrical in shape about the central axis and a radially diverging outlet portion axisymmetrical in shape about the central axis.

Brief Description of the Drawings

Fig. 1 is a side elevational partial cross-sectional view of a construction machine having a cooling system compartment separate from the engine compartment according to one embodiment of the present invention.

Fig. 2 is a top elevational partial cross-sectional view of the construction machine of Fig. 1.

Best Mode for Carrying Out the Invention

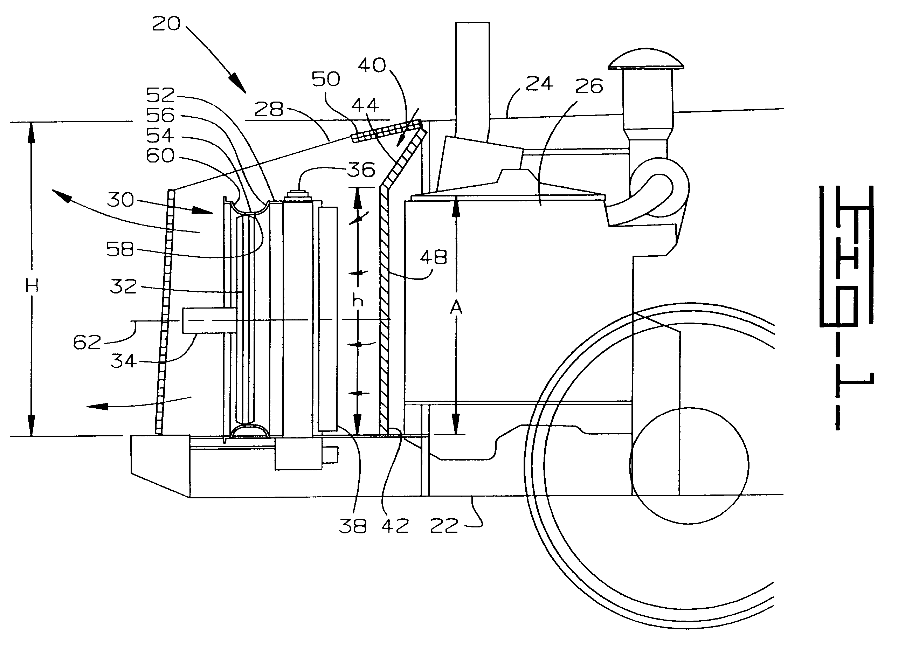

Referring now to Fig. 1, an independently ducted cooling arrangement 20 for a large diesel powered construction machine 22 is shown. Cooling arrangement 20 includes an engine compartment 24 adapted for substantially enclosing an internal combustion engine 26 therein and a cooling system compartment 28 adapted for substantially enclosing a cooling system 30 therein independent of and separate from engine compartment 24.

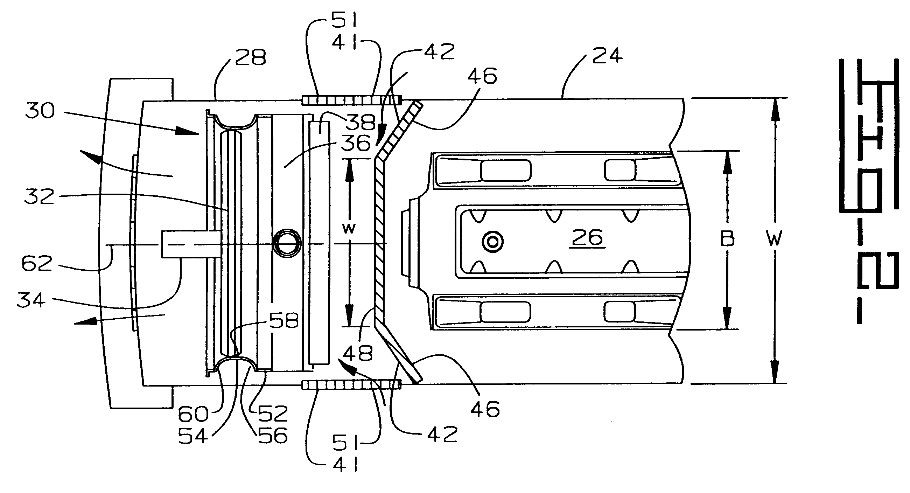

Cooling system 30 includes a rotating bladed fan 32 hydraulically driven by a motor 34. Motor 34 derives hydraulic power from engine 26. Fan 32 is rotatably mounted independent of engine 26 within cooling system compartment 28 downstream of a radiator 36 and oil cooler 38, or other such heat exchanger, to induce flow from inlets 40 and 41 (Fig. 2) of cooling system compartment 28 thereacross as shown by the direction of the arrows. Cooling system compartment 28 is sized to accommodate cooling system 30 and, in particular, to provide a compact, ducted enclosure for directing cooling air across oil cooler 38 and radiator 36.

Referring also to Fig. 2, engine 26 is typical of a variety of engines used in construction machinery in that it defines generally a rectangular envelope having an overall height dimension 'A' (Fig. 1) and an overall width dimension 'B' (Fig. 2) associated therewith. Engine compartment 24 functions as the general vehicle enclosure and substantially encloses engine 26, its accessories and a portion of the drivetrain. Ventilation of engine compartment 24 is provided by either natural or forced convection, such as that provided by an engine exhaust venturi or ventilation fan, as known in the art. Engine compartment 24 is sized to accommodate the engine 26 and its accessories and, further, to match with the cooling system compartment 28.

Cooling system compartment 28 is separated from engine compartment 24 by a noise barrier 42. Noise barrier 42 provides a common wall that extends across the full height 'H' and width 'W' of both engine compartment 24 and cooling compartment 28 to effectively isolate the cooling system compartment from the engine compartment. Through testing of various construction machinery, including various engine and cooling system configurations and sizes, a preferred engine and cooling system compartment cross-section was developed that accommodates both the engine and cooling system, respectively, while leaving sufficient cooling flow area for the engine and cooling system. Noise barrier 42, in particular, reflects such a preferred cross-section in that its width 'W' corresponds generally to the width of radiator 36 and its height 'H' corresponds generally to the height of engine 26 and its accessories. In the preferred embodiment, an optimum height 'H' for noise barrier 42 is desirably in the range of about 100 to about 130 percent of the width 'W' of noise barrier 42, wherein the width 'W' is desirably the width, and for generally square heat exchangers the height and width, of the heat exchanger.

Additionally, noise barrier 42 includes a plurality of beveled portions 44 (Fig. 1) and 46 (Fig. 2) that extend over and around portions of engine 26 to minimize overall vehicle length and provide a more compact cooling system arrangement. To further minimize overall vehicle length, cooling system 30 is located as near as possible to noise barrier 42, while still providing sufficient axial spacing therefrom to maintain optimum cooling flow. Locating cooling system 30 too near the noise barrier 42 creates cooling flow restrictions that necessitate higher fan speeds and increased levels of noise.

The particular axial spacing varies according to the shape of noise barrier 42 and to the cooling flow inlet area of cooling system compartment 28. For example, an entirely flat or planar noise barrier located adjacent to engine 26, but not extending thereover, requires greater axial spacing between the cooling system and noise barrier than a noise barrier particularly configured to and extending over portions of engine 26. In particular, the axial spacing required for sufficient cooling flow while minimizing overall vehicle length ranges from a maximum of about 40 percent of the width 'W' for a substantially planar noise barrier to as low as about 10 to 12 percent of the width 'W' for a noise barrier particularly configured to and extending over portions of the engine. The above axial spacing range assumes an unrestricted cooling flow inlet circuit. A cooling system compartment having restricted cooling flow inlets requires greater axial spacing than a free-flowing cooling compartment having generally unrestricted cooling flow inlets. As defined herein, an unrestricted cooling flow inlet or inlets having a total cooling flow inlet area greater than approximately 85 percent of the heat exchanger cross-sectional flow or face area is preferred, although more restrictive inlets having a cooling flow inlet area as low as about 50 percent of the heat exchanger cross-sectional flow or face area would perform adequately with some loss of cooling flow.

As shown in Figs. 1 and 2, noise barrier 42 includes a top beveled portion 44 and side beveled portions 46 extending outward from a central planar member 48 over portions of engine 26. The shape of central planar member 48 corresponds generally to the rectangular cross-section of the engine envelope (height 'A' and width 'B') defined by engine 26. As such, the projected height of beveled portion 44 and projected width of beveled portions 46 correspond generally to the convection flow region surrounding engine 26. The projected height of beveled portion 44 is preferably in the range of about 20 percent to about 40 percent of the width 'W' of noise barrier 42, and the projected width of beveled portions 46 are preferably in the range of about 15 percent to about 25 percent of the width 'W' of noise barrier. As such, a rectangularly shaped central planar member is defined having a width 'w' in the range of about 50 to about 70 percent of the width 'W' of noise barrier 42 and a height 'h' in the range of about 60 to about 80 percent of the height 'H' of noise barrier 42.

The cooling flow inlet area required for cooling system 30 is related to the axial spacing of the cooling system from the noise barrier. In the preferred embodiment having a beveled noise barrier, the axial spacing can be as small as approximately 10 percent to about 12 percent of the width 'W' of the noise barrier if the cooling flow inlet area is largely unrestricted. The cooling flow inlet ducts 40 and 41 include a wire mesh 50 or perforated sheet metal screen 51, respectively, having varying fractional open areas of 'P1' and 'P2' corresponding to the actual flow area through the mesh 50 or screen 51.

For a beveled noise barrier similar to noise barrier 42, top and side cooling flow ducts 40 and 41 extend width-wise across the top and sides of the cooling system compartment, respectively, and length-wise between the cooling system and the engine compartment. The inlet area 'A' of the cooling flow ducts is a function of the percent open area 'P1' and 'P2' of the wire mesh or screen, the height 'H' and width 'W' of noise barrier 42, the axial spacing of the cooling system relative to the noise barrier 42, and the projected bevel height or length 'B1' and 'B2' of the particular top beveled portion 44 or side beveled portion 46, respectively.

For example, one specific embodiment of the present invention includes a noise barrier having an overall width 'W' and spaced from cooling system 30 by a distance of N percent of 'W' (N×W), an overall height of about 120 percent of 'W' (1.2×W), and a projected bevel length and bevel height of 'B1' or 'B2' percent of 'W' (B1×W or B2×W). For such a specific embodiment, the cooling flow inlet area is given by:

$$A = P1 \times W \times (N \times W + B1 \times W) \text{ for the top duct; and}$$

$$A = P2 \times (1.2 \times W) \times (N \times W + B2 \times W) \text{ for each of the two side ducts.}$$

Given a desired unrestricted inlet of 85 percent of the heat exchanger cross-sectional flow area, an approximately square heat exchanger (cross sectional flow area of $W^2$), and side and top bevels of equal projected lengths, a simple relationship is derived governing the percent open area required of the inlet ducts:

$$P = 0.25/(N+B), \text{ or}$$

$$N = (0.25 - P \times B)/P$$

wherein the total cooling flow inlet area is:

$$A = P \times (3.4 \times W)(N \times W + B \times W).$$

One specific embodiment of the present invention includes a noise barrier spaced from cooling system 30 by a distance of about 14 percent of 'W' (N=0.14) and having common projected bevel height and lengths of about 20 percent of 'W' (B=0.2). For such a specific embodiment, the fractional open area of the inlet ducts is approximately 0.74 or about 74 percent open.

The present invention is also applicable to a variety of cooling systems 30 for further reducing noise levels. For example, referring to Fig. 1, fan 32 is disposed downstream of heat exchangers 36 and 38, and cooling system 30 operates in a suction mode to induce cooling flow across the heat exchangers. Also contemplated, however, is a fan disposed upstream of the heat exchangers, wherein cooling system 30 operates in a blower mode. For a suction mode cooling system, the above-described axial spacing relationship is defined between the noise barrier and the heat exchanger, while for a blower mode cooling system the axial spacing relationship is defined between the noise barrier and the fan. Various types of fans are contemplated as well, including mixed flow fans in addition to the axial flow fan 32. In the preferred embodiment, with the heat exchangers disposed between the engine and fan, flow exiting the heat exchangers enters box-shaped plenum 52 and is drawn into fan shroud 54 where it transitions from the asymmetric rectangular flow path of the radiator to an axisymmetric flow path.

Fan shroud 54 includes a radially converging inlet portion 56, a cylindrical transition portion 58 and a radially diverging outlet portion 60. Inlet portion 56 and outlet portion 60 each are shaped axisymmetric about central axis 62 and, further, are preferably substantially symmetric with one another about an imaginary plane constructed perpendicular to central axis 62. The radially converging axisymmetric shape of inlet portion 56 uniformly accelerates flow into the fan to reduce inlet distortion and minimize turbulence intensity. The cylindrical transition portion 58 permits the fan to be mounted at low running clearances with the fan shroud, thereby reducing recirculation and turbulence across the leading edge of the fan blades. The radially diverging axisymmetric shape of outlet portion 60 uniformly decelerates or diffuses flow exiting the fan to maintain minimal recirculation and turbulence across the fan blades.

From the above description, a cooling system arrangement is provided that includes an upright barrier wall between a substantially enclosed engine compartment and a separate engine heat exchanger and fan compartment. The cooling system arrangement is compact to reduce the overall machine length, while still providing an unrestricted cooling flow circuit to reduce fan speed and associated fan noise levels. By relating generally the dimensions of the noise barrier to the engine and heat exchanger and particularly determining the axial spacing of the cooling system relative to the noise barrier, a cooling system arrangement is provided for a variety of various sized construction machinery to reduce operating noise levels.

Still other related objects and advantages of the present invention are apparent from the above drawings and written description. For example, by providing a cooling system compartment independently ducted from the engine compartment, cooler ambient air is provided across the heat exchanger to increase cooling effectiveness and further reduce fan speeds and associated noise. As another example, by providing a separate cooling system compartment having a fan driven hydraulically from the engine, the fan rotation is easily reversible to permit the cooling system to be operated in a reverse flow mode to clean dirt and debris from the radiators. Since the cooling compartment is separate from the engine compartment, the dirt and debris is blown back out through the inlets, rather than into the engine compartment.

## Claims

1. A compact cooling system (30) and internal combustion engine arrangement (26) for use with construction machinery to reduce noise, comprising:

   an engine compartment (24) adapted for substantially enclosing an internal combustion engine (26) therein;

   a cooling system compartment (28) adapted for substantially enclosing a heat exchanger (36,38) and a fan (32) therein separate from said engine compartment (24), said cooling system compartment (28) being separated from said engine compartment (24) by a noise barrier (42) having a predetermined width;

   said fan (32) directing cooling air flow across said heat exchanger (36,38);

   said engine noise barrier (42) including a rectangular central planar portion (48) aligned with said engine (26) and a plurality of beveled edge portions (44,46) extending from said central planar portion (48) outwardly over portions of said engine (26) and said central planar portion (48) of said noise barrier (42) being spaced a predetermined distance from the nearer of said heat exchanger (36,38) or said fan (32), said predetermined distance being in the range of 10 percent of said predetermined width to 30 percent of said predetermined width.

2. The compact cooling system (30) and internal combustion engine arrangement (26) of claim 1, wherein said predetermined distance is approximately 15 percent of said predetermined width.

3. The compact cooling system (30) and internal combustion engine arrangement (26) of claim 1, wherein said central planar portion (48) has a predetermined planar portion width in the range of 50 percent to 70 percent of said predetermined width.

4. The compact cooling system (30) and internal combustion engine arrangement (26) of claim 3, wherein said noise barrier (42) has a predetermined height and said predetermined height is in the range of 100 percent to 130 percent of said predetermined width.

5. The compact cooling system (30) and internal combustion engine arrangement (26) of claim 4, wherein said central planar portion (48) has a predetermined planar portion height in the range of 60 percent to 80 percent of said predetermined height.

6. The compact cooling system and internal combustion engine arrangement of claim 5, wherein said cooling system compartment includes a plurality of screened inlets having an overall inlet cross-sectional area and an overall inlet flow area a fraction of said overall inlet cross-sectional area, said fraction being determined by the relationship;

$$P=0.25/(N+B)$$

wherein 'P' is said fraction, 'N' is said predetermined distance as a fraction of said predetermined width, and 'B' is a projected length of one of said plurality of said beveled edge portions as a fraction of said predetermined width, wherein each of said plurality of said beveled edge portions has substantially the same projected length.

**Patentansprüche**

1. Kompakte Kühlsystem- (30) und Verbrennungsmotoranordnung (26) zur Verwendung mit einer Konstruktions- oder Baumaschine zur Reduzierung von Lärm, wobei die Anordnung folgendes aufweist:

   Ein Motorabteil (24), das geeignet ist, einen Verbrennungsmotor (26) im wesentlichen darinnen einzuschließen;
   ein Kühlsystemabteil (28), das in der Lage ist, einen Wärmetauscher (36,38) und ein Gebläse (32) darinnen im wesentlichen einzuschließen, und zwar separat von dem Motorabteil (24); wobei das Kühlsystemabteil (28) von dem Motorabteil (24) durch eine Lärmbarriere (42) mit einer vorbestimmten Breite getrennt ist;
   wobei das Gebläse (32) eine Kühlluftströmung über den Wärmetauscher (36,38) leitet oder lenkt;
   wobei die Motorlärmbarriere (42) einen rechteckigen, mittigen, planaren Teil (48) aufweist, der mit dem Motor (26) ausgerichtet ist, sowie eine Vielzahl von abgeschrägten Kantenteilen (44,46), die sich von dem mittleren, planaren Teil (48) nach außen über Teile des Motors (26) erstrecken, und wobei der mittlere, planare Teil (48) der Lärmbarriere (42) mit einem vorbestimmten Abstand von dem näheren der folgenden, das heißt dem Wärmetauscher (36,38) oder dem Gebläse (32), beabstandet ist, wobei der vorbestimmte Abstand in dem Bereich von 10 Prozent der vorbestimmten Breite bis 30 Prozent der vorbestimmten Breite liegt.

2. Kompakte Kühlsystem- (30) und Verbrennungsmotoranordnung (26) nach Anspruch 1, wobei der vorbestimmte Abstand ungefähr 15 Prozent der vorbestimmten Breite beträgt.

3. Kompakte Kühlsystem- (30) und Verbrennungsmotoranordnung (26) nach Anspruch 1, wobei der mittlere, planare Teil (48) eine vorbestimmte Breite des planaren Teils in dem Bereich von 50 Prozent bis 70 Prozent der vorbestimmten Breite der Barriere besitzt.

4. Kompakte Kühlsystem- (30) und Verbrennungsmotoranordnung (26) nach Anspruch 3, wobei die Lärmbarriere (42) eine vorbestimmte Höhe besitzt, und wobei die vorbestimmte Höhe in dem Bereich von 100 Prozent zu 130 Prozent zu der vorbestimmten Breite liegt.

5. Kompakte Kühlsystem- (30) und Verbrennungsmotoranordnung (26) nach Anspruch 4, wobei der mittlere, planare Teil (48) eine vorbestimmte Höhe des planaren Teils in dem Bereich von 60 Prozent bis 80 Prozent der vorbestimmten Höhe der Barriere besitzt.

6. Kompakte Kühlsystem- und Verbrennungsmotoranordnung nach Anspruch 5, wobei das Kühlsystemabteil eine Vielzahl von abgeschirmten Einlässen mit einer Gesamteinlaßquerschnittsfläche und einem Gesamteinlaßströmungsbereich mit einem Bruchteil der Gesamteinlaßquerschnittsfläche aufweist, wobei der Bruchteil durch die folgende Beziehung bestimmt wird:

$$P=0,25/(N+B)$$

   wobei "P" ein Bruchteil ist, "N" der vorbestimmte Abstand als ein Bruchteil der vorbestimmten Breite ist, und "B" eine projizierte Länge von einem der Vielzahl der abgeschrägten Kantenteile als ein Bruchteil der vorbestimmten Breite ist, wobei jeder der Vielzahl von abgeschrägten Kantenteilen im wesentlichen die selbe projizierte Länge besitzt.

**Revendications**

1. Agencement compact d'un système de refroidissement (30) et d'un moteur à combustion interne (26) destiné à être utilisé avec des machines de terrassement pour réduire le bruit, comprenant :

   un compartiment moteur (24) adapté à contenir sensiblement un moteur à combustion interne (26) ;
   un compartiment de système de refroidissement (28) adapté à contenir sensiblement un échangeur de chaleur (36, 38) et un ventilateur (32), séparé du compartiment moteur (24), le compartiment (28) de système de refroidissement étant séparé du compartiment moteur (24) par une barrière sonore (42) de largeur prédéterminée ; le ventilateur (32) dirigeant le flux d'air de refroidissement à travers l'échangeur de chaleur (36, 38) ;
   la barrière sonore (42) du moteur comprenant une partie centrale rectangulaire et plane (48) alignée avec le moteur (26) et plusieurs parties latérales inclinées (44, 46) s'étendant à partir de la partie centrale plane (48) vers l'extérieur au-dessus d'une partie du moteur (26) et la partie centrale plane (48) de la barrière sonore (42) étant séparée d'une distance prédéterminée de l'élément le plus proche parmi l'échangeur thermique (36, 38) et le ventilateur (32), ladite distance prédéterminée se trouvant dans une plage de 10 à 30 % de ladite largeur prédéterminée.

2. Agencement compact d'un système de refroidissement (30) et d'un moteur à combustion interne (26) selon la revendication 1, dans lequel ladite distance prédéterminée est approximativement 15 % de ladite largeur prédéterminée.

3. Agencement compact d'un système de refroidissement (30) et d'un moteur à combustion interne (26) selon la revendication 1, dans lequel la partie centrale plane (48) a une largeur de partie plane prédéterminée dans la plage de 50 à 70 % de ladite largeur prédéterminée.

4. Agencement compact d'un système de refroidissement (30) et d'un moteur à combustion interne (26) selon la revendication 3, dans lequel la barrière sonore (42) a une hauteur prédéterminée et dans lequel ladite hauteur prédéterminée est dans la plage de 100 à 130 % de ladite largeur prédéterminée.

5. Agencement compact d'un système de refroidissement (30) et d'un moteur à combustion interne (26) selon la revendication 4, dans lequel la partie plane centrale (48) a une hauteur de partie plane prédéterminée dans la plage de 60 à 80 % de ladite hauteur prédéterminée.

6. Agencement compact d'un système de refroidissement et d'un moteur à combustion interne selon la revendication 5, dans lequel le compartiment du système de refroidissement comprend plusieurs entrées munies d'écrans ayant une section totale d'entrée et une surface d'écoulement totale d'entrée correspondant à une fraction de la section totale d'entrée, ladite fraction étant déterminée par la relation ;

$$P = 0,25/(N+B)$$

où P est ladite fraction, N est ladite distance prédéterminée en tant que fraction de ladite largeur prédéterminée, et B est une longueur en projection de l'une de la pluralité de parties latérales inclinées en tant que fraction de ladite largeur prédéterminée, chacune de la pluralité de parties latérales inclinées ayant sensiblement la même longueur en projection.

Fig. 1

EP 0 646 485 B1

# Fig_2_